# EUROPEAN PATENT SPECIFICATION

(11) **EP 2 972 809 B1**
(45) Date of publication and mention of the grant of the patent: **30.12.2020**
(21) Application number: 14720356.6
(22) Date of filing: 13.03.2014
(51) Int. Cl.: G06F 9/4401

(54) **BOOT SEQUENCING FOR MULTI BOOT DEVICES**
STARTSEQUENZIERUNG FÜR VORRICHTUNGEN MIT MEHREREN STARTVORGÄNGEN
SÉQUENÇAGE DE DÉMARRAGE POUR DISPOSITIFS À DÉMARRAGES MULTIPLES

(30) Priority: 14.03.2013 US 201361784833 P
(43) Date of publication of application: 20.01.2016
(73) Proprietor: Microchip Technology Incorporated, Chandler, AZ 85224-6199 (US)
(72) Inventor: SAMUEL, Roshan, Chandler, AZ 85248 (US); PESAVENTO, Rodney, Chandler, AZ 85226 (US); WOJEWODA, Igor, Tempe, AZ 85283 (US)
(74) Representative: sgb europe
(86) International application number: PCT/US2014/026424
(87) International publication number: WO 2014/160375

(56) References cited:
- US-A- 5 822 582
- US-A- 6 158 002
- US-A1- 2004 049 668
- US-A1- 2005 182 922
- US-A1- 2006 085 629
- US-B1- 6 493 822

## Description

The present disclosure relates to microcontrollers and microprocessors and, particularly, boot sequencing for multi-booting embedded microcontroller systems.

Upon being powered or reset, an embedded microcontroller must select a boot device containing a boot image from which the embedded system will run. The microcontroller may support the use of more than one boot device. Multi-booting refers to the microcontroller selecting between multiple available boot devices. In order to support multi-booting, a mechanism is required that allows the microcontroller to select the desired boot device from the set of available boot devices.

Systems typically utilize a default boot vector to identify the boot device containing the boot image that is to be loaded. A default boot vector, which is sometimes referred to as a reset vector, is a designated address space that identifies the location of the boot device from which the system is presently configured to run. Upon a reboot or reset, the CPU accesses the boot vector and is directed to the location of a boot device containing a boot image, which is then loaded. Each boot image will typically include application code for operation of the embedded system and boot loader code for loading the application code. The boot loader initializes the system and loads the application code for execution by the system. In a single boot system, the sole boot image is identified by the boot vector. However, in a multi-boot system, the problem arises as to how to adapt this boot vector mechanism for selecting between multiple available boot devices.

One solution for supporting multi-booting is to change the boot vector that is utilized. This can be accomplished by inserting a jump instruction to be executed in conjunction with a reset instruction. The jump instruction directs the system to the location of a selected boot device. Another possibility is to redefine the location of the boot vector prior to the issuance of a reset command such that, upon reset, the system loads the boot image specified by this redefined boot vector. Another possibility is to circumvent the boot vector by placing the boot image at a fixed address and programming the system to boot directly from this address.

US 5,822,582 describes a multi-boot apparatus allows a portable computer to boot from a predetermined list of bootable data storage devices, even if the data storage devices have been relocated during operation. The computer system has a hard disk bay and multi-bay for accepting one or more data storage devices and/or battery packs. Boot code is located on one or more data storage devices, each of said data storage devices having a device characteristic, said computer having a predetermined initial program load (IPL) order for sequencing the delivery of said boot code from said data storage devices to said computer. The apparatus comprising: a drive detector adapted to identify the device characteristic of each of said data storage devices; a drive remapper coupled to said drive detector, said drive remapper resetting the characteristic of said data storage devices to enable said data storage devices to supply the boot code to the computer; and a boot-up selector coupled to said computer, said drive detector and said drive remapper, said boot-up selector adapted to select the data storage device listed in the IPL order as the boot data storage device, wherein each of said data storage device belongs to a class of data storage device having a signature characteristic, said drive detector further comprising a data storage device type detector coupled to said data storage device for classifying each of said data storage device based on the signature characteristic of said data storage device.

US 2006/085629 A1 discloses mapping a reset vector to a block device attached via a peripheral device bus. The document provides a method of initializing a system comprising determining if a bock device controller supports a Block Exclusion Vector (BEV) mechanism, if so, determining if a block device that includes a boot loader is accessible by the system, and if so, utilizing the boot loader to initialize the system.

US 6,158,002 discloses a method and apparatus of boot device switching by a floppy disk. The disclosed method for booting from a desired peripheral device that is connected to a computer system having a floppy disk drive comprises the steps of: inserting a floppy media into the floppy disk drive of the computer system, turning ON the computer system to enable a system BIOS of the computer system, executing a boot code stored on the floppy media, the boot code being configured to scan a number of buses of the computer system to identify host adapters that are connected to respective ones of the number of buses, executing a BIOS code for each of the host adapters which causes an assignment of drive numbers to peripheral devices connected to the host adapters, rearranging the drive numbers assigned to the peripheral devices in order to assign 80h to the desired peripheral device, and booting the computer system from the desired peripheral device.

Conventional approaches require making significant changes to the system's software each time a different boot device is selected. For instance, if the location of the boot vector is changed, boot images must be recompiled in order to utilize the new boot vector. As changes to the boot images are made, the user must ensure that updated boot images are configured according to the remapped boot vector. With each change to the location of the boot vector, the user must propagate these changes to all relevant boot images. If the boot vector is circumvented entirely, not only must each boot image be recompiled to point to the address location of the boot code to be used, the device logic itself must be altered to circumvent the default boot vector and, as before, each boot image would have to be recompiled in order to reset to this new boot code location. It would be desirable to have a configurable multi-booting solution that does not require recompiling boot images each time a change to the selected boot device is made. It would be further desirable to enable the multi-booting selections to be made via a simple hardware configuration.

Conventional dual-booting approaches require substantial reconfiguration in order to change the selected boot image and provide no ability to update boot images in a fail-safe manner. Hence, there is a need for configurable dual-booting solution that allows boot determinations to be made in hardware and provides for seamless updating of boot images.

The above and other objects are solved by the subject matter of the independent claims. The dependent claims comprise embodiments of the invention.

According to the method of the invention for booting a multi-boot microcontroller having a first boot image and a second boot image, the first boot image and the second boot image comprises booting instructions and application code. The multi-boot microcontroller comprises a central processing unit coupled with a program memory storing the first and second boot image.

The method comprises: determining a first boot sequence number associated with the first boot image and stored within the program memory and determining a second boot sequence number associated with the second boot image and stored within the program memory, wherein the first and second boot sequence numbers (128, 126) signify the relative order of the boot images.

The method further comprises: identifying a selected boot image by comparing the first sequence number and the second boot sequence number wherein the comparison determines whether the first boot image or the second boot image is the selected boot image, wherein the selected boot image is identified by device hardware operations.

The method further comprises: mapping the address of the selected boot image to a primary boot memory within the program memory specified by a default boot vector and booting the microcontroller from the default boot vector. The boot image not determined to be the selected boot image is a secondary boot image, wherein the contents of the secondary boot memory location can be updated without affecting device operations executing from the primary boot memory location.

The method further comprises: mapping the address of the secondary boot image to a secondary boot memory location, processing a command directing the microcontroller to temporarily swap from the selected boot image to the boot image stored in the secondary boot memory location by interrupting execution of the selected boot image and executing a jump to the boot image stored in the secondary boot memory location, upon which jump the boot image stored in the secondary boot memory location is executed, wherein the temporary swap is made without resetting the microcontroller.

Further embodiments may also include: determining the first boot sequence number and determining the second boot sequence number comprises, respectively, reading the first boot sequence number from a predetermined location associated with the first boot image and reading the second boot sequence number from a predetermined location associated with the second boot image. Further embodiments may also include verifying that multi-booting of the device has been enabled. In further embodiments, the boot image not determined to be the selected boot image is a secondary boot image and may also include mapping the address of the secondary boot image to a secondary boot memory location wherein the contents of the secondary boot memory location can be updated without affecting device operations executing from the primary boot memory location. Further embodiments may also include: processing a command directing the device to swap from the selected boot image to the boot image stored in the secondary boot memory location; and switching execution of the device from the selected boot image to the boot image stored in the secondary boot memory location wherein the switch is made without resetting the device. Further embodiments may also include: setting a configuration parameter indicating whether the device is executing from the primary boot memory location or the secondary boot memory location. In further embodiments, the verification that multi-booting is enabled comprises determining whether the first boot image and the second boot image are both valid boot images.

The present invention may be better understood, and its numerous objects, features, and advantages made apparent to those skilled in the art by referencing the accompanying drawings. The use of the same reference symbols in different drawings indicates similar or identical items.
FIG. 1 is a block diagram of an exemplary processor according to embodiments.
FIG. 2 schematically illustrates operation of embodiments.
FIG. 3 is a flowchart illustrating operation of embodiments.
FIG. 4 is a flowchart illustrating operation of embodiments.

The disclosure and various features and advantageous details thereof are explained more fully with reference to the exemplary, and therefore non-limiting, embodiments illustrated in the accompanying drawings and detailed in the following description. Descriptions of known programming techniques, computer software, hardware, operating platforms and protocols may be omitted so as not to unnecessarily obscure the disclosure in detail. It should be understood, however, that the detailed description and the specific examples, while indicating the preferred embodiments, are given by way of illustration only and not by way of limitation.

As used herein, the terms "comprises," "comprising," "includes," "including," "has," "having," or any other variation thereof, are intended to cover a non-exclusive inclusion. For example, a process, product, article, or apparatus that comprises a list of elements is not necessarily limited only those elements but may include other elements not expressly listed or inherent to such process, process, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Additionally, any examples or illustrations given herein are not to be regarded in any way as restrictions on, limits to, or express definitions of, any term or terms with which they are utilized. Instead these examples or illustrations are to be regarded as being described with respect to one particular embodiment and as illustrative only. Those of ordinary skill in the art will appreciate that any term or terms with which these examples or illustrations are utilized encompass other embodiments as well as implementations and adaptations thereof which may or may not be given therewith or elsewhere in the specification. Language designating such non-limiting examples and illustrations includes, but is not limited to: "for example," "for instance," "e.g.," "in one embodiment," and the like.

As discussed above, an embedded system typically runs from a boot image where the location of the boot image in memory is identified by the default boot vector. The default boot vector specifies the boot image that is to be loaded whenever the system is booted or reset. This default boot vector may be located at any predetermined location in program memory as long as this location is uniformly known to the CPU and the boot images as the address of the first boot instruction to be executed upon a reboot or a rest. Upon the system being booted or reset, the address specified by the default boot vector identifies the boot image to be loaded. However, unlike conventional systems, embodiments provide for the ability to change the boot image to be loaded via a simple configuration process that can be executed in hardware.

As described above, changing the location of the default boot vector is possible but requires recompiling each of the boot images to point to this new boot vector location. Instead, embodiments provide the ability to change the boot image that is to be used without having to recompile the boot images or alter the logic by which selected boot image is determined by the system. In other words, embodiments utilize a conventional default boot vector that is the first instruction executed upon any reboot or reset of the system. Embodiments provide the ability to switch boot images by re-ordering the available boot devices. Thus, a different boot device can be designated as the selected boot devices by re-ordering the boot devices in the sequence. According to embodiments, a boot device may be any memory device that can be assigned to the boot vector, such as internal or external volatile memory (such as RAM), or internal or external non-volatile memory such as Flash memory, EEPROM or an SD Card.

According to embodiments, boot devices are assigned sequence numbers that specify the rank of each boot device containing a boot image among the available set of boot devices. Upon a reboot or reset, the system may use a state machine implemented in hardware to determine the relative ordering of the available boot devices based on the sequence numbers of the boot devices. Once the selected boot device has been identified, the address of the selected boot device is mapped to the default boot vector without altering the boot image. This allows the CPU to boot conventionally from the default boot vector which is redirected to the selected boot image. In this fashion, any number of boot images can be made available and selected using configurable sequence numbers where the process for selecting the desired boot image can be implemented in hardware and thus executed without the CPU having to load and execute any software.

According to some embodiments, the sequence number provided to each boot image signifies the relative order of the boot images. In one embodiment, the boot image assigned the lowest sequence number is the selected boot image, with the boot image with the next lowest sequence number being the first alternate selected boot image. In another embodiment, the boot image that is provided the highest sequence number is the selected boot image.

In some embodiments, the sequence number for each boot device is stored in a predetermined location of that boot image such that each boot device provides a standardized mechanisms for identifying the sequence number of the boot device. In this manner, the user is able to assign a sequence number to each boot device such that the sequence number is stored as part of the boot image. Each available boot device can then be queried in order to ascertain its assigned sequence number. In another embodiment, the boot device sequence numbers are stored a data structure present in memory. This data structure can be queried in order to determine the available boot devices and the sequence number for each boot device. In another embodiment, sequence numbers are stored external to the boot devices such that each sequence number is stored in a memory location that is associated with a boot device.

After the reset, the sequence numbers are utilized to identify the selected boot device. In some embodiments, a state machine is utilized to read the sequence numbers for all available boot devices and to determine the boot device with the lowest (or highest) sequence number. In this manner, the state machine identifies the selected boot device.

According to embodiments, once the relative ordering of the sequence numbers has been used to identify the selected boot device, the address of the selected boot device is mapped to the boot memory specified by the default boot vector. The selected boot image will thus become the default boot image that is loaded on a subsequent reboots or resets and will remain the default boot image until the sequence numbers of the available boot images are altered to indicate that a different boot image has been selected. Also according to embodiments, the address of the boot image with the second ranked sequence number is mapped to a secondary boot memory location. As described below, embodiments provide the ability for users to trigger swapping execution between the boot memory and the secondary boot memory. This provides the opportunity for the device to switch execution to the secondary boot memory while updating the boot image in the boot memory. This allows fail-safe updating of boot images and also allows updates to be made without resetting the device.

The CPU then proceeds to execute from the selected boot device. According to some embodiments, sequence numbers of boot devices may be changed via software instructions within the application code where these changes either increment or decrement the sequence number of one or more boot devices. After a boot or reset of the device, the updated sequence numbers are used in determining the relative ordering of the boot devices. In this manner, the user can change the selected boot image without having to recompile any software or alter the booting logic of the device. Consequently, the selected boot image can be determined in hardware by ordering the valid sequence numbers of available boot images.

Each boot memory location is a region in memory that contains a boot image, which is a set of booting instructions and application code from which the CPU can run. However, a region in memory corresponding to a boot memory location may also be blank. This allows the ability to reserve a region in memory, but has the effect of establishing an invalid boot image. The device can then update these invalid boot images while executing from a valid boot image.

In another embodiment explained in further detail below, a user may "hot swap" from one boot image to another without having to reset the device. For example, while executing the application code loaded by a first boot image, the user can trigger an immediate swap to the execution of a second boot image. This provides the ability to swap from the previously selected boot image loaded in boot memory with the boot image loaded in the secondary boot memory, as long as the trigger remains in effect. In some embodiments, this temporary boot image swap can be adopted for use in subsequent resets by adjusting the boot sequence numbers of the boot images. Upon the next reset, the boot images will be remapped accordingly.

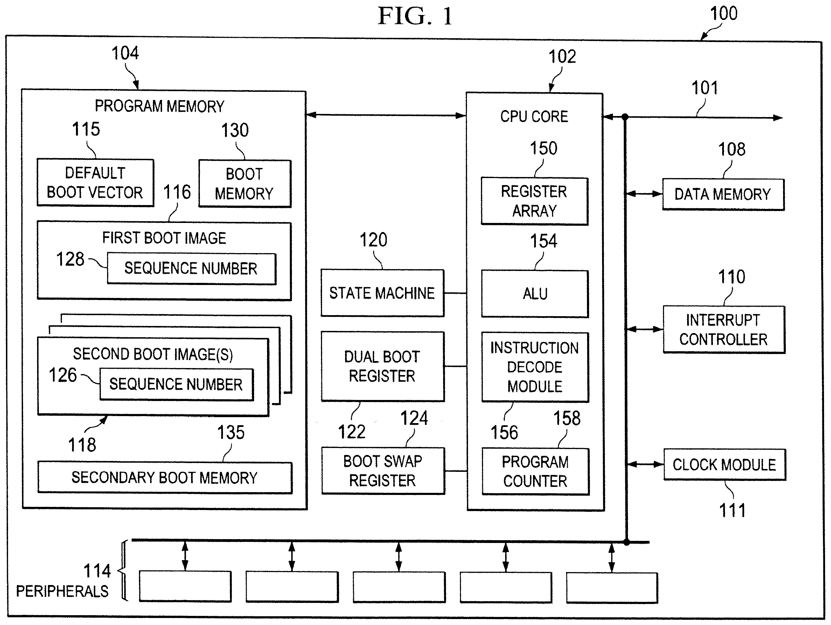

Turning now Figure 1, a block diagram of an exemplary microcontroller 100 that implements a multi-boot system in accordance with embodiments is shown. It is noted that other configurations of the microcontroller are possible. Thus, Figure 1 is an exemplary embodiment. The microcontroller 100 includes a bus 101 and a central processing unit (CPU) core 102 coupled to the bus 101. The CPU core 102 may include one or more register arrays 150, an arithmetic logic unit 154, an instruction decode module 156 and a program counter 158. Upon being booted or reset, the CPU core 102 is configured to read its first instruction from the default boot vector 115 stored in program memory.

In the embodiment illustrated in Figure 1, data memory 108 communicates with the CPU core 102 via the bus 101. The bus 101 also provides the CPU core 102 with access to microcontroller services such as interrupt controllers 110 and clock module 111. The CPU core 102 can also access one or more peripheral components 114 via the bus 101. These peripheral components may be implemented entirely by the microcontroller or may be implemented in some part external to the microcontroller. The peripherals 114 available to the microcontroller may implement, for example, timing support, I/O (input/output) interfaces, PWM (pulse width modulation) and USB functionality.

The CPU core 101 also communicates with program memory 104. In some embodiments one or more boot images 116, 118 are stored in program memory 104. Other embodiments may allow for boot images to be stored in a separate, dedicated memory. The boot images are comprised of a first boot image 116 and one or more second boot images 118. As described below, embodiments allow the microcontroller 100 to selectively boot based on either the first boot images 116 or one of the second boot images 118. As described above, some embodiments may refer to boot memory locations, regions or devices rather than boot images. Thus, in some embodiments, first boot image 116 and second boot image 118 may be represented as regions in memory that are boot memory locations with no guarantee that the region contains a valid boot image.

According to the embodiment of Figure 1, a default boot vector 115 is located in program memory 104. The CPU core 102 is configured to read its first instruction from the default boot vector 115. Some embodiments may allow for the boot vector 115 to be located in other non-volatile or volatile memory. The default boot vector 115 may be located anywhere in the program memory as long as the CPU core 102 has been configured to access the default boot vector 115 upon a boot or reset. The default boot vector 115 specifies the location in memory of the boot image to be loaded, which is referred to as the boot memory 130. Thus, upon a boot or reset the CPU core 102 accesses the default boot vector 115 and is directed to the address of the boot memory 130 which has been mapped to the address of the selected boot device which stores the selected boot image.

The device may also retain other boot images in program memory via a secondary boot memory 135. Based on the ordering of the boot images by sequence numbers, the selected boot image is identified and its address is mapped to the boot memory 130. The second ranked boot image is the first alternate boot image and its address mapped to secondary boot memory 135. The user can then trigger switching execution from the boot memory 130 and the secondary boot memory 135 as needed in order to update these boot images in a fail-safe manner.

In some embodiments, the boot images 116, 118 include predetermined locations for storing boot sequence numbers. As illustrated in Figure 1, the first boot image is comprised of a boot sequence number 128 which is used to determine the relative ordering of the first boot image versus other available boot images that have been assigned a boot sequence number. In this same manner, the second boot image is also comprised of a boot sequence number 126 that specifies the relative order of the second boot image within the set of available boot images.

In order to facilitate determination of the relative ordering of the available boot images, the boot sequence number of each boot image is determined in a standardized manner. In some embodiments, the boot sequence number will be stored in a predetermined location within the boot image. For example, the boot sequence number of each boot image may be located at a memory address that is located at a fixed offset from the first instruction of the boot image. In some embodiments, the memory address at which the boot sequence number is stored within a boot image may be available as a variable that can be queried at a predetermined location within the boot image. In some embodiments, the boot sequence numbers that have been assigned are stored in a data structure. In this scenario, the relative ordering of the available boot images can be ascertained by querying this data structure to obtain the sequence number for each boot image. In some embodiments, the boot sequence numbers will be stored in non-volatile memory external to the boot image.

Every available boot image can be assigned a boot sequence number. However, embodiments may only assign a subset of the available boot images a sequence number. In such scenarios, boot images with no sequence numbers would be ordered behind all boot images with an assigned sequence number. In some embodiments, some of the available boot devices may be invalid and thus cannot be ordered in this fashion. For these invalid boot devices, querying their sequence number returns an error. These invalid boot images would not be mapped to any boot memory and thus do not exist as booting options with multi-boot device.

Figure 1 also illustrates a boot panel comprised of special-purpose configuration registers that are used to direct the booting process in some embodiments. One such register is a dual boot control register 122 that can be used to configure whether the microcontroller 100 is to execute dual booting processes. As explained in more detail below, if the value of the dual boot register 122 does not enable dual booting, the device will proceed to boot the microcontroller as a single boot device. The configuration registers may also comprise a boot swap register 124 that is used to identify the boot image that is presently loaded and to command the device to conduct a hot swap to a specified boot image, for example the boot image in the secondary boot memory. Additional configuration registers may be present that further direct the boot sequencing process.

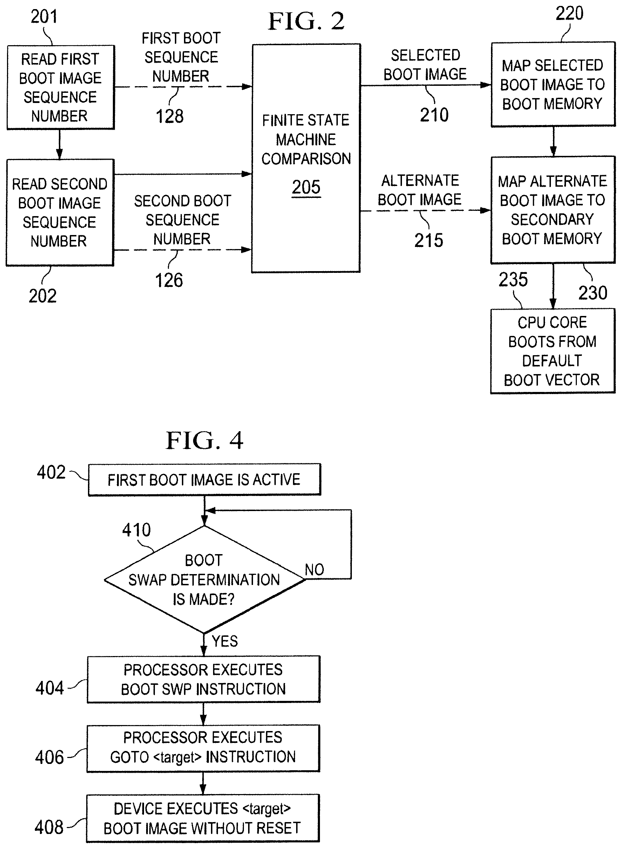

Figure 2 schematically illustrates a process for utilizing boot sequence numbers in accordance with embodiments. Upon being booted or reset, the device reads the sequence numbers for the two available boot images 116, 118. At step 201, the boot sequence number 126 for the first boot image 116 is determined. At step 202, the boot sequence number 128 for the second boot image is determined. At step 205, the device then compares the first boot image sequence number 128 and the second boot image sequence number 126. Based on this comparison, the selected boot image 210 and the first alternate boot image 215 are identified. At step 220, the address of the boot device storing the selected boot image 210 is mapped to the boot memory location 130. At step 230, the address of the first alternate boot image 215 is mapped to the secondary boot memory location 135. In some embodiments, the address of the remaining valid boot images are mapped, in order, to the secondary boot memory. At step, 235, the CPU core then boots conventionally, by accessing the default boot vector and being redirected to the address of the boot device storing the selected boot image. The CPU core proceeds to boot from the selected boot image.

The selected boot image can be identified, according to some embodiments, utilizing a finite state machine 120. Using a finite state machine for identifying the selected boot image facilitates embodiments that implement configurable dual booting in hardware. The finite state machine 120 is used to make pair-wise comparisons of boot sequence numbers in order to determine their relative ordering. In Figure 2, a finite state machine 120 is used to determine the relative ordering of the boot sequence numbers of a first boot image 116 and a second boot image 118. At steps 201 and 202, the boot sequence numbers for each of the boot images is determined. As described above, according to some embodiments, the boot sequence number of each boot image may be stored at a predetermined address location of the boot image. Other embodiments may allow for the boot sequence numbers to be stored in other fixed locations or data structures in memory. At step 205, the finite state machine then compares the boot sequence number of the first boot image 128 and the boot sequence number of the second boot image 126.

In the example of Figure 2, the relative ordering of only two boot images is illustrated. It is noted, however, that the finite state machine 120 can be used to determine the relative ordering of any number of boot images. The finite state machine 120 compares the boot sequence numbers of two boot images at one time. However, according to algorithms known in the art, a series of pair-wise comparisons can be made in order to determine the relative ordering of the boot sequence numbers for any number of boot images.

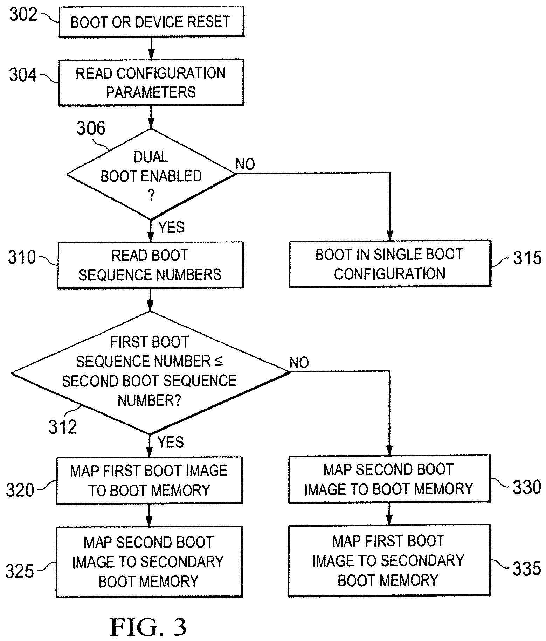

In the embodiment of Figure 3, the device makes a preliminary determination whether to proceed with dual-booting based on whether dual booting has been requested or whether multiple boot images are available for booting. At step 302, the device undergoes a boot or a reset. At step 304, reads the configuration data necessary to determine whether to proceed with dual booting. In one embodiment, the boot configuration panel is accessed in order to read configuration bits that encode dual booting instructions. In some embodiments, these configuration bits will be located in dual boot register 122. Other embodiments may instead store these configuration bits in fixed locations in program memory. In some embodiments, dual booting is determined based on whether multiple valid boot images can be identified. Thus, in step 304, the CPU core accesses the boot sequence numbers for every available boot image.

At step 306, the device determines whether dual booting has been enabled. If configuration bits are used, embodiments will determine whether these bits enable dual booting. If dual booting is based on valid boot sequence numbers, embodiments will evaluate the boot sequence numbers that have been identified to determine if two or more valid boot images are available. If only one valid boot image is identified or the configuration bits specify that dual booting is not enabled, the device boots in a single boot configuration at step 315 by booting from the default boot vector. If no valid boot image is identified, the CPU core boots from the boot image specified by the default boot vector, which will be the boot image that was last known to be valid.

If step 306 determines that dual boot is enabled, then the selected boot image is determined as described with respect to the embodiment of Figure 2. At step 310, the boot sequence numbers of the first boot image 116 and the second boot image 118 are determined. Based on the boot sequence number comparison made at step 312, either the first boot image 116 or the second boot image 118 is determined to be the selected boot image. If the boot sequence number of the first boot image 116 is the lowest boot sequence number or equal to the lowest sequence number, at step 320, the address of the first boot image is mapped to the boot memory and, at step, 325, the address of the second boot image is mapped to secondary boot memory. Conversely, if the boot sequence number of the second boot image 118 is the lowest boot sequence number, at step 330, the address of the second boot image is mapped to the boot memory and, at step, 335, the address of the first boot image is mapped to secondary boot memory.

The process by which a boot image hot swap is conducted is shown in Figure 4. At a process step 402, the device is executing according to a first boot image 116. At this point, the boot swap register 124 signals that a hot swap is not presently in effect. At step 410, the boot swap register 124 is used to determine whether a boot swap is to be undertaken. In some embodiments, the boot swap register 124 may encode a value directing that a boot swap be undertaken. For example, a zero entry in the boot swap register may indicate that the current boot image should be maintained and a one entry may indicate that the current boot image should be swapped. Another possibility is for the boot swap register 124 to encode the device number of the boot device that is presently loaded. As long as the boot swap register 124 contains the device number corresponding to the currently executing boot image, no swap is made. If the boot swap register 124 is changed to point to a different device number, this signals that a boot swap should be undertaken. Yet another possibility, is for boot swaps to be specified in software via a bootswap instruction. This embodiment is the focus of the remaining elements of Figure 4. If boot swap register 124 indicates that no boot swap is presently requested, the device continues to monitor the boot swap register until any such indication is identified.

In process step 404, it is determined that the user has directed the device to enact a hot swap of boot images. In the embodiment of Figure 4, the user will trigger a hot swap of boot images by issuing a BOOTSWP instruction that is followed by a GOTO <target> instruction where the <target> specifies the boot image to be hot swapped. For instance, the <target> would specific the second boot image 118 as the boot image to be swapped in place of the active boot image. At step 404, the CPU core 102 executes the BOOTSWP instruction and interrupts the execution of the current active first boot image 116.

At process step 406, the CPU core 102 executes the GOTO instruction and jumps directly to the <target> boot image, for example the second boot image 118. Upon executing this jump, the CPU core 102 begins executing the second boot image 118. This results in a hot swap from the first boot image 116 to the second boot image 118 with no reset of the device and no changes to the exiting device configuration. At process step 408, the configuration data is updated to reflect that active boot image has been hot swapped. For instance, boot swap register 124 would be updated to indicate that no hot swap is presently requested or specify the address of the boot image that is presently executing.

A hot swap of boot images, by itself, does not alter the boot image that is mapped to boot memory and thus does not change the boot image that will be loaded upon a reset of the device. Thus, even though the second boot image 118 may have been hot swapped in place of the first boot image 116, if the first boot image 116 is still mapped to boot memory and the device will load the first boot image 116 upon a subsequent boot or rest. Unless modifications are made to the boot sequence numbers of the boot images, a hot swap will constitute a temporary swap that lasts only until the device is reset. A hot swap of boot images can be made into permanent swap via the previously described process of updating boot sequence numbers. For example, if the user has hot swapped to the second boot image 118, the swap can be made permanent by re-assigning boot sequence numbers of the available boot images such that the second boot image 118 has the lowest boot sequence number which results in the second boot image 118 being mapped to the default boot vector 115.

One advantage provided by embodiments is fail-safe mechanism for updating boot images. If the presently active boot image that is executing receives an update, embodiments provide a fail-safe method for making this update. For instance, the updated boot image can be stored to the secondary boot memory. One the updated boot image has been verified, the sequence numbers can be updated for the executing boot image and the updated boot image, as described above, such that the updated boot image now has the lowest/highest sequence number such that it will be determined to be the selected boot image on the next boot or reset. If a power failure were to occur at any time during the update such that the updated boot image is corrupted, the device can continue operating from the currently executing boot image. If the power failure occurs after the updated boot image is verified but during the sequence number update, either the updated sequence number is valid such that the new boot image is correctly identified as the selected boot image or the sequence number is invalid such that the currently executing boot code is loaded based on it still being located in boot memory and identified by the default boot vector.

Although the foregoing specification describes specific embodiments, numerous changes in the details of the embodiments disclosed herein and additional embodiments will be apparent to, and may be made by, persons of ordinary skill in the art having reference to this description. In this context, the specification and figures are to be regarded in an illustrative rather than a restrictive sense

## Claims

1. A method for booting a multi-boot microcontroller having a first boot image and a second boot image, the first boot image and the second boot image comprising booting instructions and application code, wherein the multi-boot microcontroller comprises a central processing unit (102) coupled with a program memory (104) storing the first and second boot image (116, 118), the method comprising:
determining a first boot sequence number (128) associated with the first boot image (116) and stored within the program memory (104);
determining a second boot sequence number (126) associated with the second boot image (118) and stored within the program memory (104), wherein the first and second boot sequence numbers (128, 126) signify the relative order of the boot images;
identifying a selected boot image (116, 118) by comparing the first sequence number (128) and the second boot sequence number (126) wherein the comparison determines whether the first boot image (116) or the second boot image (118) is the selected boot image, wherein the selected boot image is identified by device hardware operations;
mapping the address of the selected boot image (116, 118) to a primary boot memory (130) within the program memory (104) specified by a default boot vector (115);
booting the microcontroller from the default boot vector (115), **characterized in that**
the boot image (118; 116) not determined to be the selected boot image is a secondary boot image, wherein the contents of the secondary boot memory location (135) can be updated without affecting device operations executing from the primary boot memory location (130); the method further comprising:
mapping the address of the secondary boot image to a secondary boot memory location (135);
processing a command directing the microcontroller to temporarily swap from the selected boot image to the boot image stored in the secondary boot memory location by
interrupting execution of the selected boot image and executing a jump to the boot image stored in the secondary boot memory location (135), upon which jump the boot image stored in the secondary boot memory location (135) is executed, wherein the temporary swap is made without resetting the microcontroller.

2. A method in accordance with claim 1, wherein determining the first boot sequence number (128) and determining the second boot sequence number (126) comprises, respectively, reading the first boot sequence number (128) from a predetermined location within the first boot image (116) and reading the second boot sequence number (126) from a predetermined location within the second boot image (118).

3. A method in accordance with claim 1 or 2, the method further comprising:
verifying that multi-booting of the microcontroller has been enabled by reading an associated special-purpose configuration register (122) within the microcontroller (100).

4. A method in accordance with claim 1, the method further comprising:
setting a configuration parameter within a special-purpose configuration register (124) of the microcontroller (100) indicating whether the microcontroller (100) is executing from the primary boot memory location (130) or the secondary boot memory location (135).

5. A method in accordance with claim 3, wherein verification that multi-booting is enabled comprises determining whether the first boot image (116) and the second boot image (118) are both valid boot images.

6. A multi-boot microcontroller comprising a central processing unit (102) configured to execute instructions from an embedded program memory (104) storing a first boot image (116) and a second boot image (118), the first boot image and the second boot image comprising booting instructions and application code,
wherein the program memory (104) comprises memory storage for a first boot sequence number (128) associated with the first boot image (116);
wherein the program memory (104) comprises memory storage within the program memory (104) for a second boot sequence number (126) associated with the second boot image (118) wherein the first and second boot sequence numbers (128, 126) signify the relative order of the boot images;
wherein the microcontroller (100) further comprises a state machine (120) operable to identify after a reset a selected boot image by comparing the first sequence number (128) and the second boot sequence number (126) wherein the comparison determines whether the first boot image (116) or the second boot image (118) is the selected boot image;
wherein the program memory (104) comprises a primary boot image memory storage (130), wherein the address of the selected boot image (116, 118) is mapped to the primary boot image memory storage (130);
wherein the microcontroller (100) comprises a default boot vector (115), wherein the default boot vector (115) is accessed by the central processing unit (102) upon being booted or reset and wherein the boot vector specifies the location in memory of the primary boot image memory storage (130) to which the primary boot image (130) is mapped; **characterized in that**
the boot image not determined to be the selected boot image is a secondary boot image;
wherein the microcontroller further comprises a secondary boot memory storage location for storing the secondary boot image (118) being mapped to a secondary boot memory storage (135), wherein the contents of the secondary boot memory location can be updated without affecting device operations executing from the primary boot memory (130);
wherein the microcontroller is configured to process a command directing a temporary swap from the selected boot image to the boot image stored in the secondary boot memory (135) upon which execution of the selected boot image is interrupted and a jump to the boot image stored in the secondary boot memory (135) is executed, upon which jump the boot image stored in the secondary boot memory location (135) is executed, wherein the temporary swap is made without resetting the microcontroller.

7. A multi-boot microcontroller in accordance with claim 6, wherein the first boot sequence number (128) is stored at a predetermined location within the first boot image (116) and the second boot sequence number (126) is stored at a predetermined location within the second boot image (118).

8. A multi-boot microcontroller in accordance with claim 6, the device is a microcontroller (100) further comprising:
memory storage (124) for a configuration parameter wherein the parameter indicates whether the microcontroller is executing from the primary boot memory (130) or the secondary boot memory (135).

9. A multi-boot microcontroller in accordance with claim 6 or 8, wherein the command comprises a dedicated instruction (BOOTSWP) followed by jump instruction (GOTO).

10. A multi-boot microcontroller in accordance with one of the preceding claims 6-9 wherein the microcontroller determines if multi-booting is enabled by determining whether the first boot image (116) and the second boot image (118) are both valid boot images.

## Patentansprüche

1. Verfahren zum Starten eines Multi-Start-Mikrocontrollers mit einem ersten Startprofil und einem zweiten Startprofil, wobei das erste Startprofil und das zweite Startprofil Startanweisungen und Anwendungscode aufweisen, wobei der Multi-Start-Mikrocontroller eine Zentraleinheit (102) aufweist, die mit einem Programmspeicher (104) gekoppelt ist, der das erste und zweite Startprofil (116, 118) speichert, wobei das Verfahren aufweist:
Bestimmen einer ersten Startsequenznummer (128), die dem ersten Startprofil (116) zugeordnet und im Programmspeicher (104) gespeichert ist;
Bestimmen einer zweiten Startsequenznummer (126), die dem zweiten Startprofil (118) zugeordnet und im Programmspeicher (104) gespeichert ist, wobei die ersten und zweiten Startsequenznummern (128, 126) die relative Reihenfolge der Startprofile bezeichnen;
Identifizieren eines ausgewählten Startprofils (116, 118) durch Vergleichen der ersten Sequenznummer (128) und der zweiten Startsequenznummer (126), wobei der Vergleich bestimmt, ob das erste Startprofil (116) oder das zweite Startprofil (118) das ausgewähltes Startprofil ist, wobei das ausgewählte Startprofil durch Vorrichtungshardwareoperationen identifiziert wird;
Zuordnen der Adresse des ausgewählten Startprofils (116, 118) zu einem primären Startspeicher (130) innerhalb des Programmspeichers (104), der durch einen Standardstartvektor (115) spezifiziert ist;
Starten des Mikrocontrollers vom Standardstartvektor (115), **dadurch gekennzeichnet, dass**
das Startprofil (118; 116), das nicht als ausgewähltes Startprofil bestimmt wurde, ein sekundäres Startprofil ist, wobei der Inhalt des sekundären Startspeicherorts (135) aktualisiert werden kann, ohne die vom primären Startspeicherort (130) ausgeführten Vorrichtungsoperationen zu beeinflussen; wobei das Verfahren weiterhin aufweist:
Zuordnen der Adresse des sekundären Startprofils zu einem sekundären Startspeicherort (135);
Verarbeiten eines Befehls, der den Mikrocontroller anweist, vorübergehend vom ausgewählten Startprofil zu dem im sekundären Startspeicherort gespeicherten Startprofil zu wechseln, indem die Ausführung des ausgewählten Startprofils unterbrochen und ein Sprung zu dem im sekundären Startspeicherort gespeicherten Startprofil (135) ausgeführt wird, wobei bei diesem Sprung das im sekundären Startspeicherort (135) gespeicherte Startprofil ausgeführt wird, wobei das temporäre Wechseln erfolgt, ohne den Mikrocontroller zurückzusetzen.

2. Verfahren gemäß Anspruch 1, wobei das Bestimmen der ersten Startsequenznummer (128) und das Bestimmen der zweiten Startsequenznummer (126) jeweils das Lesen der ersten Startsequenznummer (128) von einem vorgegebenen Ort innerhalb der ersten Startprofils (116) und Lesen der zweiten Startsequenznummer (126) von einem vorgegebenen Ort innerhalb des zweiten Startprofils (118) aufweist.

3. Verfahren gemäß Anspruch 1 oder 2, wobei das Verfahren weiterhin aufweist:
Überprüfen, ob ein Mehrfachstart des Mikrocontrollers ermöglicht wurde durch Lesen eines zugehörigen speziellen Konfigurationsregisters (122) innerhalb des Mikrocontrollers (100).

4. Verfahren gemäß Anspruch 1, wobei das Verfahren weiterhin aufweist:
Einstellen eines Konfigurationsparameters in einem speziellen Konfigurationsregister (124) des Mikrocontrollers (100), der angibt, ob der Mikrocontroller (100) vom primären Startspeicherort (130) oder vom sekundären Startspeicherort (135) ausgeführt wird.

5. Verfahren gemäß Anspruch 3, wobei die Überprüfung, ob das Multi-Starten aktiviert ist, das Bestimmen aufweist, ob das erste Startprofil (116) und das zweite Startprofil (118) beide gültige Startprofile sind.

6. Multi-Start-Mikrocontroller, der eine Zentraleinheit (102) aufweist, die ausgebildet ist, um Anweisungen aus einem eingebetteten Programmspeicher (104) auszuführen, der ein erstes Startprofil (116) und ein zweites Startprofil (118) speichert, wobei das erste Startprofil und das zweites Startprofil Startanweisungen und Anwendungscode aufweisen,
wobei der Programmspeicher (104) Speicher für eine erste Startsequenznummer (128) aufweist, die dem ersten Startprofil (116) zugeordnet ist;
wobei der Programmspeicher (104) Speicher innerhalb des Programmspeichers (104) für eine zweite Startsequenznummer (126) aufweist, die dem zweiten Startprofil (118) zugeordnet ist, wobei die ersten und zweiten Startsequenznummern (128, 126) die relative Reihenfolge der Startprofile bezeichnen;
wobei der Mikrocontroller (100) weiterhin eine Zustandsmaschine (120) aufweist, die nach einem Zurücksetzen ein ausgewähltes Startprofil durch Vergleichen der ersten Sequenznummer (128) und der zweiten Startsequenznummer (126) identifizieren kann, wobei der Vergleich bestimmt, ob das erste Startprofil (116) oder das zweite Startprofil (118) das ausgewählte Startprofil ist;
wobei der Programmspeicher (104) einen primären Startprofil-Speicher (130) aufweist, wobei die Adresse des ausgewählten Startprofils (116, 118) auf den primären Startprofil-Speicher (130) abgebildet ist;
wobei der Mikrocontroller (100) einen Standard-Start-Vektor (115) aufweist, wobei beim Starten oder Zurücksetzen der Zentraleinheit (102) von dieser auf den Standard-Start-Vektor (115) zugegriffen wird und wobei der Start-Vektor den Ort im Speicher des primären Startprofil-Speicher (130) spezifiziert, dem das primäre Startprofil (130) zugeordnet ist;
**dadurch gekennzeichnet, dass**
das Startprofil, das nicht als ausgewähltes Startprofil festgelegt wurde, ein sekundäres Startprofil ist;
wobei der Mikrocontroller weiterhin einen sekundären Startspeicherort zum Speichern des sekundären Startprofils (118) aufweist, das einem sekundären Startspeicher (135) zugeordnet ist, wobei der Inhalt des sekundären Startspeicherorts aktualisiert werden kann, ohne Vorrichtungsoperationen, die aus dem primären Startspeicher (130) ausgeführt werden, zu beeinflussen;
wobei der Mikrocontroller ausgebildet ist, um einen Befehl zu verarbeiten, der einen temporären Austausch von dem ausgewählten Startprofil zu dem im sekundären Startspeicher (135) gespeicherten Startprofil leitet, woraufhin die Ausführung des ausgewählten Startprofils unterbrochen und ein Sprung zu dem im sekundären Startspeicher (135) gespeicherten Startprofil ausgeführt wird, woraufhin bei diesem Sprung das im sekundären Startspeicherort (135) gespeicherte Startprofil ausgeführt wird, wobei der temporäre Austausch erfolgt, ohne den Mikrocontroller zurückzusetzen.

7. Multi-Start-Mikrocontroller gemäß Anspruch 6, wobei die erste Startsequenznummer (128) an einem vorgegebenen Ort innerhalb des ersten Startprofils (116) und die zweite Startsequenznummer (126) an einem vorgegebenen Ort innerhalb des zweiten Startprofils (118) gespeichert ist.

8. Multi-Start-Mikrocontroller gemäß Anspruch 6, wobei die Vorrichtung ein Mikrocontroller (100) ist, der weiterhin aufweist:
Speicher (124) für einen Konfigurationsparameter, wobei der Parameter angibt, ob der Mikrocontroller vom primären Startspeicher (130) oder vom sekundären Startspeicher (135) ausgeführt wird.

9. Multi-Start-Mikrocontroller gemäß Anspruch 6 oder 8, wobei der Befehl einen dedizierten Befehl (BOOTSWP) gefolgt von einem Sprungbefehl (GOTO) aufweist.

10. Multi-Start-Mikrocontroller gemäß einem der vorhergehenden Ansprüche 6 bis 9, wobei der Mikrocontroller bestimmt, ob Multi-Start aktiviert ist, indem bestimmt wird, ob das erste Startprofil (116) und das zweite Startprofil (118) beide gültige Startprofile sind.

## Revendications

1. Procédé d'amorçage d'un microcontrôleur à amorçage multiple présentant une première image d'amorçage et une seconde image d'amorçage, la première image d'amorçage et la seconde image d'amorçage comprenant des instructions d'amorçage et un code d'application, dans lequel le microcontrôleur à amorçage multiple comprend une unité centrale de traitement (102) couplée à une mémoire de programme (104) stockant les première et seconde images d'amorçage (116, 118), le procédé comprenant les étapes ci-dessous consistant à :
déterminer un premier numéro de séquence d'amorçage (128) associé à la première image d'amorçage (116) et stocké dans la mémoire de programme (104) ;
déterminer un second numéro de séquence d'amorçage (126) associé à la seconde image d'amorçage (118) et stocké dans la mémoire de programme (104), dans lequel les premier et second numéros de séquence d'amorçage (128, 126) signifient l'ordre relatif des images d'amorçage ;
identifier une image d'amorçage sélectionnée (116, 118) en comparant le premier numéro de séquence d'amorçage (128) et le second numéro de séquence d'amorçage (126), dans lequel la comparaison détermine si la première image d'amorçage (116) ou la seconde image d'amorçage (118) est l'image d'amorçage sélectionnée, dans lequel l'image d'amorçage sélectionnée est identifiée par des opérations matérielles de dispositif ;
mettre en correspondance l'adresse de l'image d'amorçage sélectionnée (116, 118) avec une mémoire d'amorçage primaire (130) dans la mémoire de programme (104) spécifiée par un vecteur d'amorçage par défaut (115) ;
amorcer le microcontrôleur à partir du vecteur d'amorçage par défaut (115), **caractérisé en ce que** :
l'image d'amorçage (118; 116) non déterminée comme étant l'image d'amorçage sélectionnée est une image d'amorçage secondaire, dans lequel les contenus de l'emplacement de mémoire d'amorçage secondaire (135) peuvent être mis à jour sans affecter des opérations de dispositif s'exécutant à partir de l'emplacement de mémoire d'amorçage primaire (130) ; le procédé comprenant en outre les étapes ci-dessous consistant à :
mettre en correspondance l'adresse de l'image d'amorçage secondaire avec un emplacement de mémoire d'amorçage secondaire (135) ;
traiter une instruction ordonnant au microcontrôleur de permuter temporairement, de l'image d'amorçage sélectionnée à l'image d'amorçage stockée dans l'emplacement de mémoire d'amorçage secondaire :
en interrompant l'exécution de l'image d'amorçage sélectionnée et en exécutant un saut vers l'image d'amorçage stockée dans l'emplacement de mémoire d'amorçage secondaire (135), à l'issue duquel saut l'image d'amorçage stockée dans l'emplacement de mémoire d'amorçage secondaire (135) est exécutée, dans lequel la permutation temporaire est réalisée sans réinitialiser le microcontrôleur.

2. Procédé selon la revendication 1, dans lequel l'étape de détermination du premier numéro de séquence d'amorçage (128) et l'étape de détermination du second numéro de séquence d'amorçage (126) comprennent, respectivement, l'étape consistant à lire le premier numéro de séquence d'amorçage (128) à partir d'un emplacement prédéterminé dans la première image d'amorçage (116), et l'étape consistant à lire le second numéro de séquence d'amorçage (126) à partir d'un emplacement prédéterminé dans la seconde image d'amorçage (118).

3. Procédé selon la revendication 1 ou 2, dans lequel le procédé comprend en outre l'étape ci-dessous consistant à :
vérifier que l'amorçage multiple du microcontrôleur a été activé en lisant un registre de configuration spécialisé associé (122) dans le microcontrôleur (100).

4. Procédé selon la revendication 1, dans lequel le procédé comprend en outre l'étape ci-dessous consistant à :
définir un paramètre de configuration dans un registre de configuration spécialisé (124) du microcontrôleur (100) indiquant si le microcontrôleur (100) s'exécute à partir de l'emplacement de mémoire d'amorçage primaire (130) ou de l'emplacement de mémoire d'amorçage secondaire (135).

5. Procédé selon la revendication 3, dans lequel l'étape de vérification que l'amorçage multiple est activé comprend l'étape consistant à déterminer si la première image d'amorçage (116) et la seconde image d'amorçage (118) correspondent toutes deux à des images d'amorçage valides.

6. Microcontrôleur à amorçage multiple comprenant une unité centrale de traitement (102) configurée de manière à exécuter des instructions à partir d'une mémoire de programme intégrée (104) stockant une première image d'amorçage (116) et une seconde image d'amorçage (118), la première image d'amorçage et la seconde image d'amorçage comprenant des instructions d'amorçage et un code d'application ;
dans lequel la mémoire de programme (104) comprend un stockage en mémoire pour un premier numéro de séquence d'amorçage (128) associé à la première image d'amorçage (116) ;
dans lequel la mémoire de programme (104) comprend un stockage en mémoire dans la mémoire de programme (104) pour un second numéro de séquence d'amorçage (126) associé à la seconde image d'amorçage (118), dans lequel les premier et second numéros de séquence d'amorçage (128, 126) signifient l'ordre relatif des images d'amorçage ;
dans lequel le microcontrôleur (100) comprend en outre une machine à états finis (120) exploitable de manière à identifier, après une réinitialisation, une image d'amorçage sélectionnée, en comparant le premier numéro de séquence d'amorçage (128) et le second numéro de séquence d'amorçage (126), dans lequel la comparaison détermine si la première image d'amorçage (116) ou la seconde image d'amorçage (118) est l'image d'amorçage sélectionnée ;
dans lequel la mémoire de programme (104) comprend un stockage en mémoire d'image d'amorçage primaire (130), dans lequel l'adresse de l'image d'amorçage sélectionnée (116, 118) est mise en correspondance avec le stockage en mémoire d'image d'amorçage primaire (130) ;
dans lequel le microcontrôleur (100) comprend un vecteur d'amorçage par défaut (115), dans lequel l'unité centrale de traitement (102) accède au vecteur d'amorçage par défaut (115) lorsqu'elle est amorcée ou réinitialisée, et dans lequel le vecteur d'amorçage spécifie l'emplacement en mémoire du stockage en mémoire d'image d'amorçage primaire (130) avec lequel l'image d'amorçage primaire (130) est mise en correspondance ; **caractérisé en ce que** :
l'image d'amorçage qui n'est pas déterminée comme étant l'image d'amorçage sélectionnée est une image d'amorçage secondaire ;
dans lequel le microcontrôleur comprend en outre un emplacement de stockage en mémoire d'amorçage secondaire pour stocker l'image d'amorçage secondaire (118) qui est mise en correspondance avec un stockage en mémoire d'amorçage secondaire (135), dans lequel les contenus de l'emplacement de mémoire d'amorçage secondaire peuvent être mis à jour sans affecter des opérations de dispositif s'exécutant à partir de la mémoire d'amorçage primaire (130) ;
dans lequel le microcontrôleur est configuré de manière à traiter une instruction ordonnant une permutation temporaire de l'image d'amorçage sélectionnée vers l'image d'amorçage stockée dans la mémoire d'amorçage secondaire (135), à l'issue de laquelle l'exécution de l'image d'amorçage sélectionnée est interrompue, et dans lequel un saut vers l'image d'amorçage stockée dans la mémoire d'amorçage secondaire (135) est exécuté, à l'issue duquel saut l'image d'amorçage stockée dans l'emplacement de mémoire d'amorçage secondaire (135) est exécutée, dans lequel la permutation temporaire est réalisée sans réinitialiser le microcontrôleur.

7. Microcontrôleur à amorçage multiple selon la revendication 6, dans lequel le premier numéro de séquence d'amorçage (128) est stocké à un emplacement prédéterminé dans la première image d'amorçage (116), et le second numéro de séquence d'amorçage (126) est stocké à un emplacement prédéterminé dans la seconde image d'amorçage (118).

8. Microcontrôleur à amorçage multiple selon la revendication 6, dans lequel le dispositif est un microcontrôleur (100) comprenant en outre :
un stockage en mémoire (124) pour un paramètre de configuration dans lequel le paramètre indique si le microcontrôleur s'exécute à partir de la mémoire d'amorçage primaire (130) ou de la mémoire d'amorçage secondaire (135).

9. Microcontrôleur à amorçage multiple selon la revendication 6 ou 8, dans lequel l'instruction comprend une instruction dédiée (BOOTSWP) suivie d'une instruction de saut (GOTO).

10. Microcontrôleur à amorçage multiple selon l'une quelconque des revendications 6 à 9, dans lequel le microcontrôleur détermine si l'amorçage multiple est activé en déterminant si la première image d'amorçage (116) et la seconde image d'amorçage (118) correspondent toutes deux à des images d'amorçage valides.
